(19) Europäisches Patentamt
European Patent Office
Office européen des brevets

(11) **EP 3 913 798 B1**

(12) **EUROPEAN PATENT SPECIFICATION**

(45) Date of publication and mention
of the grant of the patent:
**28.06.2023 Bulletin 2023/26**

(21) Application number: **20175245.8**

(22) Date of filing: **18.05.2020**

(51) International Patent Classification (IPC):
*G01K 11/3206* (2021.01)    *G01K 1/14* (2021.01)
*G01L 1/24* (2006.01)    *G01L 1/26* (2006.01)
*G01D 5/353* (2006.01)    *H02S 50/00* (2014.01)
*H02S 50/10* (2014.01)    *H02S 50/15* (2014.01)
*G01B 5/00* (2006.01)    *G01B 11/16* (2006.01)

(52) Cooperative Patent Classification (CPC):
**G01K 11/3206; G01B 5/0014; G01B 11/18;**
**G01D 5/35316; G01D 5/35377; G01K 1/14;**
**G01L 1/246; G01L 1/26; H02S 50/00; H02S 50/10;**
**H02S 50/15;** Y02E 10/50

(54) **THERMAL MONITORING IN LAMINATE STRUCTURES**

THERMISCHE ÜBERWACHUNG IN LAMINATSTRUKTUREN

SURVEILLANCE THERMIQUE DANS DES STRUCTURES STRATIFIÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.11.2021 Bulletin 2021/47**

(72) Inventors:
• **NIVELLE, Philippe**
**3001 Leuven (BE)**
• **DAENEN, Michaël**
**3001 Leuven (BE)**

(74) Representative: **AWA Sweden AB**
**Box 5117**
**200 71 Malmö (SE)**

(73) Proprietors:
• **Imec VZW**
**3001 Leuven (BE)**
• **Universiteit Hasselt**
**3500 Hasselt (BE)**

(56) References cited:
**EP-A1- 3 106 839    US-A1- 2019 016 065**

EP 3 913 798 B1

**Description**

Technical field

The present inventive concept relates to a sensor device and a sensor system for measuring temperature. In particular, the present inventive concept relates to measuring temperature in a laminate structure such as a photovoltaic, PV, laminate structure.

Background

During the lifetime of a PV module there are various factors that influence its reliability ranging from production-induced stress; such as firing or annealing of the metal contacts on the cell, soldering of the cells into strings, lamination of the cells into a module; up to stress induced during use by the environment (such as temperature fluctuations, irradiance fluctuations, hail impacts, wind and snow deformations). Many degradation mechanisms within a PV module may be directly or indirectly related to changes in the thermomechanical behavior over time.

Recognizing the importance of the thermo-mechanical behavior, several methods have been reported in literature to quantify this behavior. In many cases an indirect measurement is used to quantify the strain levels. To study production-induced stress, the movement of cells is tracked using 3D image correlation (Using finite element methods and 3D image correlation to model solar cell bowing; Coulter, Czyzewicz, Farneth, Prince, & Rajendran, 2009). Using analytical or numerical modelling, the strain on other components may be deduced. Similarly, 3D scanning of modules or cells is performed to capture the full displacement field (Numerical simulation of bowing phenomenon in ultra-thin crystalline silicon solar cells; Yoon, Baek, Chung, Song, & Shin, 2014). Another, more simplified approach, is to measure only the maximum deformation at a single point using a confocal laser or ultrasonic sensor (Reduction of thermomechanical stress using electrically conductive adhesives; Geipel, Rendler, Stompe, Eitner, & Rissing, 2015). The other (non-measured) displacements may be determined through simulations.

In order to use the aforementioned techniques, the temperature should be known. In a testing environment, measurements may be performed in controlled temperature conditions. This is however not feasible if measurements are to be made in the field.

Mounting thermocouples on the laminate surface allows actual temperatures to be measured across the laminate surface however without providing clear temperature information regarding the inside of the PV module, where the functional PV cell of the PV module is located. The geometric constraints of the PV module may not allow for conventional thermocouples and its associated wiring to be incorporated within the laminate structure, and introducing new and more materials may anyway influence the results obtained from the measurements and the function of the PV module. Additionally, electromagnetic interference from the thermocouple and the wiring may affect the measurements and the function of the PV cell.

As an example of thermal sensors used for measuring surface temperatures of PV modules, there exists fiber Bragg grating sensors within a glass fiber placed within a steel tube (Fiber Bragg Grating Sensors for Mainstream Industrial Processes; Allwood. G, Wild G, Hinckley S., 2017). The steel tube is fixed to the front surface of the PV module. A change in temperature will cause the glass fibers with the fiber Bragg grating sensors to expand, wherein the temperature change may be optically detected. As the sensors exhibit a comparably low thermal mass, the fibers may follow the changing temperatures rapidly, even more so than thermocouples. However, also this type of thermal sensor does not provide accurate temperature information regarding the inside of the laminate structure.

US 2019/016065 A1 is an example of using different grating sensors within a single glass fiber placed within a steel tube for other structures than PV modules.

Summary

In view of the above, it would be desirable to enable reliable measurements of local temperatures within a laminate structure, such as a PV laminate structure. It is accordingly an object of the present inventive concept to provide a device and system for measuring temperature in a laminate structure. It is a specific object of the present inventive concept to enable temperature measurements in a localized manner within a laminate structure without significantly impacting the function of the laminate structure.

These and other objects of the invention are at least partly met by the present inventive concept as defined in the independent claims. Further and alternative objects may be understood from the following.

According to a first inventive aspect, there is provided a sensor device for measuring a temperature in a laminate structure. The sensor device comprises: a capillary for being embedded in the laminate structure between two layers thereof; a medium arranged within the capillary; an optical fiber extending through the capillary and surrounded by the medium, wherein at least a portion of the optical fiber has temperature-dependent transmission characteristics; and a strain sensor configured to measure strain in proximity to the portion of the optical fiber with temperature-dependent transmission characteristics, wherein in proximity means within a distance of the diameter of the capillary, wherein the strain sensor is another optical fiber with strain-dependent transmission characteristics arranged outside the capillary.

The first aspect allows for embedding of a temperature sensor between two layers of a laminate structure, thus enabling localized measurements in a relatively non-intrusive manner. Furthermore, the optical fiber allows for optical temperature measurements with high accuracy and low noise without affecting the strain or temperature of the surrounding structure. Additionally, the temperature-dependent portion(s) of the optical fiber allows for high spatial accuracy of the temperature measurements.

The capillary may act as an encapsulant for the medium and optical fiber. As the capillary is suitable for being embedded in the laminate structure, the capillary may (when embedded) be arranged to extend parallel to a laminate plane of the laminate structure, i.e. parallel to the layers of the laminate structure. The capillary with the optical fiber may hence be arranged at a desired level within the laminate structure, to enable a temperature measurement therein.

By the medium arranged in the capillary and surrounding the optical fiber, the optical fiber may be mechanically decoupled from strain in the capillary. That is, a transfer of strain in the capillary (e.g. transferred from the laminate structure) to the optical fiber may be avoided or at least minimized. The medium may further reduce the risk of the optical fiber coming in unwanted contact with an interior wall of the capillary, thereby affecting the measurement. The capillary may be mounted vertically to avoid friction effects between the fiber and the steel tube caused by gravity. The medium may reduce the impact of gravity on the optical fiber and thus allows the capillary to be mounted also horizontally, thereby further enabling embedding of the sensor device between two layers of a laminate structure.

The temperature-dependent transmission characteristics of the optical fiber portion(s) may comprise one or more of a temperature-dependent transmission coefficient, a temperature-dependent reflection coefficient, a temperature-dependent transmission wavelength or wavelength range, a temperature-dependent reflection wavelength or wavelength range, or a temperature-dependent time of flight of light propagating in the optical fiber.

According to the first aspect, the laminate structure may be a photovoltaic laminate structure. While the following disclosure will focus on embodiments with a photovoltaic laminate structure, other laminate structures are possible. For example, it would be beneficial to measure the temperature of different layers of architectural glass to e.g. analyse degradation of the transmission characteristics.

For brevity and simplicity, the relation between the sensor device and the laminate structure will mainly be made in relation to a single sensor device and a single laminate structure, although it should be realized that a plurality of sensor devices and/or a plurality of laminate structures may be used, as also further described below.

The capillary may have a diameter equal to or smaller than 450 $\mu$m. The capillary may have a cross-section with an opening of any shape. A diameter in this range may allow the capillary to be embedded between two layers in a thin-film laminate, such as PV laminate structures, which typically may comprise one or more layers with a thickness of 450 $\mu$m or less.

The capillary may be a capillary tube, advantageously having a cross-section with a rounded (e.g. circular or oval) shape.

The capillary may be sealed at its ends to hold the medium.

Said at least a portion of the optical fiber may be a fiber Bragg grating. Fiber Bragg gratings are beneficial in that they allow for a precise control of the transmission characteristics. The fiber Bragg gratings may be configured to reflect light in one or more bands of a specific range of wavelengths, which range changes depending on the temperature.

The optical fiber may comprise at least two fiber Bragg gratings. The two fiber Bragg gratings may have different lattice constants. Each fiber Bragg grating may thus be configured to reflect a different range of wavelengths. The two fiber Bragg gratings may have different temperature dependent transmission characteristics. Each range may change depending on the temperature such that each change is distinct to allow for several temperature measurement results to be analyzed at once. The fiber Bragg gratings may be spaced apart from other.

The medium may be a liquid medium, such as silicon oil or tetraethylene glycol. A liquid may be easily injected into the capillary. Moreover, a liquid medium may provide an efficient mechanical decoupling between the optical fiber and the capillary by allowing the optical fiber to float in the liquid.

The medium and the capillary may be optically transparent. Transparency allows for the sensor device to be incorporated in a transparent laminate structure, such as in front of a PV cell or within architectural glass, with a minimum impact on the transmission properties of the laminate structure. The medium and the capillary may be transparent to light in a wavelength range overlapping (at least partially) a wavelength range for which the laminate structure is transparent. The degree of transparency is determined by various factors such as the type and material of the laminate structure. For example, a sensor device for use in front of a PV cell may advantageously be optically transparent in at least a wavelength range overlapping with the wavelength range that is absorbed by the PV cell, preferably a substantial part of the wavelength range that is absorbed by the PV cell.

The sensor device may be configured to be connectable to a measurement circuit configured to measure a change in the temperature-dependent transmission characteristics of the optical fiber. This allows the temperature measurement results by the sensor device to be processed in real-time.

The sensor device comprises a strain sensor. The strain sensor is adapted to measure strain in proximity to the portion of the optical fiber with temperature-dependent transmission characteristics. The strain sensor allows the thermal measurements to be decoupled from the mechanical measurements and vice versa. The strain sensor is arranged outside the capillary. The strain sensor may be rigidly attached to a constituent layer of the laminate structure via an adhesive or bonding. Proximity may be within a distance of half the diameter of the capillary or within a distance of a few hundred $\mu$m, such as 200 $\mu$m, 300 $\mu$m, 400 $\mu$m or 500 $\mu$m.

The strain sensor is an optical fiber with strain-dependent transmission characteristics. This allows for similar manufacturing processes of the different sensors of the sensor device, thereby increasing efficiency of bulk manufacturing and parallelization. The strain sensor may comprise one or more fiber Bragg gratings to provide the strain-dependent transmission characteristics.

The strain-dependent transmission characteristics of the optical fiber of the strain sensor may comprise one or more of a strain-dependent transmission coefficient, a strain-dependent reflection coefficient, a strain-dependent transmission wavelength or wavelength range, a strain-dependent reflection wavelength or wavelength range, or a strain-dependent time of flight of light propagating in the optical fiber.

According to a second aspect of the invention, a sensor system for measuring a temperature in a laminate structure is provided. The system comprises: the laminate structure to be measured; the sensor device according to the first aspect, the capillary thereof being embedded in the laminate structure between two layers thereof; and a light source configured to transmit light through the optical fiber extending through the capillary.

According to the second aspect, the light source may be incandescent, a laser or an LED and preferably has a wavelength spectrum that overlaps the wavelengths of the characteristic transmission and/or reflection of the optical fiber portion(s). The light source may have a broad wavelength range, such as a white light laser or a white LED. The laser may further comprise a depolariser. Effects and features of this second aspect are analogous to those described above in connection with the first aspect. Embodiments mentioned in relation to the first aspect are compatible with the second aspect.

The sensor system may further comprise a measurement circuit arranged to measure the light reflected or transmitted in the optical fiber extending through the capillary, wherein the reflected or transmitted light is indicative of the temperature of a layer of the laminate structure. The reflected or transmitted light may be indicative of the temperature in that it has been reflected or transmitted by or through a portion of the optical fiber with temperature-dependent transmission characteristics. This allows the temperature measurement results by the sensor device to be processed in real-time.

The sensor device may be embedded in an encapsulant layer of the laminate structure. This is beneficial in that during manufacture it may be relatively easy to embed the sensor device (or more specifically the capillary of the sensor device) in the encapsulant layer, and thus integrate the sensor device with the laminate structure. The encapsulant layer may be arranged between two other layers of the laminate structure.

The laminate structure may further comprise at least one strain sensor embedded in the laminate structure. The strain sensor allows the thermal measurements to be decoupled from the mechanical measurements and vice versa.

The strain sensor may be embedded between two layers of the laminate structure. The strain sensor may be embedded between the same two layers as the capillary. This allows strain to be measured in relative proximity to the capillary.

The strain sensor may be attached to the capillary. However, the strain sensor may preferably be attached to a layer of the laminate structure, such as a cover glass of a PV module. The layers of the laminate structure are usually rigid or stiff, which allows for precise strain measurements.

The laminate structure may further comprise at least one photovoltaic, PV, cell. In line with the above discussion, the sensor device is especially suitable for a laminate structure comprising a PV cell considering its shape, and possible transparency, to not disrupt the function of the PV cell. The sensor device may thereby even be arranged in front of the PV cell.

The sensor device (e.g. the capillary thereof) may be attached to the photovoltaic cell using an optically transparent bonding material; and the sensor device may further comprise a strain sensor attached to the photovoltaic cell using an optically transparent bonding material; wherein the strain sensor may be adapted to measure strain in proximity to said at least a portion of the optical fiber. This allows for precise measurements of factors affecting the durability of the PV cell without affecting its function. In other embodiments, the stress sensor is attached to a layer of the laminate or directly to the capillary.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

> Fig. 1a is a schematic view illustrating a sensor device.
> Fig. 1b is is a schematic view illustrating a sensor device in a laminate structure.
> Fig. 2a shows an optical fiber of a sensor device comprising fiber Bragg gratings.
> Fig. 2b is a plot illustrating a refractive index of the optical fiber of Fig. 2a.
> Fig. 2c is a set of plots illustrating transmission characteristics of two fiber Bragg gratings in an optical fiber of a sensor device.
> Fig. 3 is a schematic view illustrating a sensor device comprising a strain sensor.
> Fig. 4 is a schematic view illustrating a sensor device connected to a measurement circuit.
> Fig. 5 is a schematic view illustrating a sensor device in a laminate structure with a photovoltaic cell.

Detailed description

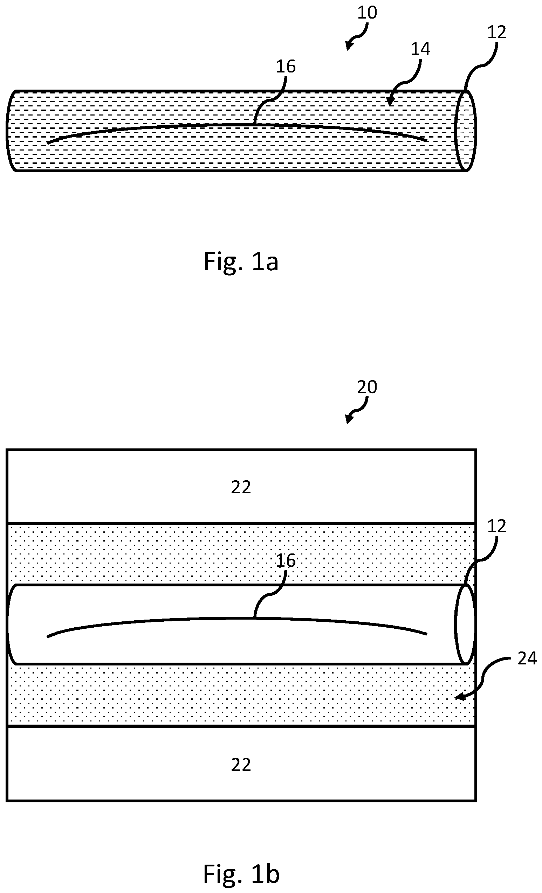

Referring now to Fig. 1a and 1b, a sensor device 10 for measuring a temperature in a photovoltaic laminate structure 20 will be described. It should be realized that the figures are not to scale and merely for illustrative purposes.

The sensor device 10 comprises a capillary 12, a medium 14 arranged within the capillary 12 and an optical fiber 16 extending through the capillary 12 and surrounded by a medium 14.

The capillary 12 extends parallel to the layers of the laminate structure 20. The capillary 12 may as shown form a capillary tube with a circular or oval cross-sectional shape. Although a rounded cross-section may offer advantages such as facilitating rational manufacture, reduced risk of breakage and cracks etc, also other cross-sectional shapes are envisaged such as a rectangular or polygonal cross-sectional shape. The capillary 12 acts as an encapsulant for the medium 14 and optical fiber 16 and may be sealed along its ends to hold the medium 14.

The capillary 12 may have a diameter of 450 $\mu$m or smaller, such as 400 $\mu$m, 300 $\mu$m or 200 $\mu$m. Capillaries 12 with a diameter larger than 450 $\mu$m are possible, such as 500 $\mu$m or 600 $\mu$m, however these are costlier. A diameter of 450 $\mu$m may hence be beneficial from a cost-perspective and also facilitate integration of the capillary 12 into a greater variety of different laminate structures, such as thin-film laminates.

The medium 14 may mechanically decouple the optical fiber 16 from strain in the capillary 12. The medium 14 may further counteract the effects of gravity on the optical fiber 16 to further mechanically decouple the optical fiber 16.

The medium 14 may further protect the optical fiber 16 from damage or deformation as the sensor device 10 is moved or tilted; reduce the possibility of the optical fiber 16 sticking to the inner surface of the capillary 12; or protect the optical fiber 16 from moisture.

The thermal conductivity of the medium 14 may advantageously be high enough to allow for a precise temperature measurement. The minimal thermal conductivity of the medium 14 is determined by the material of the laminate structure 20 and capillary 12 and dimensions such as the thickness of the capillary 12 or a seal on the ends of the capillary 12.

The medium 14 may be formed of electrically insulating material to reduce the impact of the sensor device 10 on the electrical properties of the laminate structure 20.

The medium 14 may be a liquid such as silicon oil or tetraethylene glycol. This allows it to be easily injected into the capillary 12. The optical fiber 16 may be surrounded by the liquid medium, e.g. float in the medium 14. The liquid 14 may have a viscosity such as to decouple the optical fiber 16 from strain in the capillary 12 (and in case of a horizontal orientation counteract effects of gravity on the optical fiber 16), while being low enough to allow for injection of the liquid 14 into the capillary 12. A combination of density, surface tension and contact angle with the material of the capillary 12 may determine the maximum viscosity that still allows for injection of the liquid 14 into the capillary 12.

The liquid 14 may be a mixture comprising a density-increasing medium or a medium to minimise the coefficient of thermal expansion of the liquid.

The medium 14 may be water-repellant, i.e. hydrophobic. Exposure of the optical fiber 16 to water may thus be avoided, which otherwise may damage the optical fiber 16 over time. This may be especially beneficial for a non-coated optical fiber 16 as it is more sensitive to water.

Although a liquid medium 14 may represent an advantageous type of medium it is envisaged that also other types of mediums may be used instead, such as a gas or foam-like medium. The medium 14 may further be a gel made from two components injected separately into the capillary 12.

The capillary 12 may be formed of electrically insulating material, e.g. glass or quartz, to reduce the impact of the sensor device 10 on the electrical properties of the laminate structure 20.

The capillary 12 and/or the medium 14 may be optically transparent. The optical transparency may comprise translucency and partial transparency, e.g. in limited wavelength ranges and limited transmission. The optical transparency may be across a wavelength range, such as the visible light range, and may be achieved by transmitting at least half or at least 80 % of the incoming light. The optical transparency may be controlled by matching the refractive index of the capillary 12 and/or the medium to adjacent materials, such as to the refractive index of the layers 22 of the laminate structure 20.

The refractive index of the medium 14 may advantageously match the refractive index of the material of the capillary 12, which e.g. may lie in a range from 1.40 to 1.60. Silicone oil, which is a suitable medium 14 according to the plethora of factors mentioned above, may have a refractive index of around 1.4, such as 1.35 to 1.45. Transparency allows for the sensor device 10 to be placed in front of a photovoltaic, PV, cell or within architectural glass without disrupting their functions.

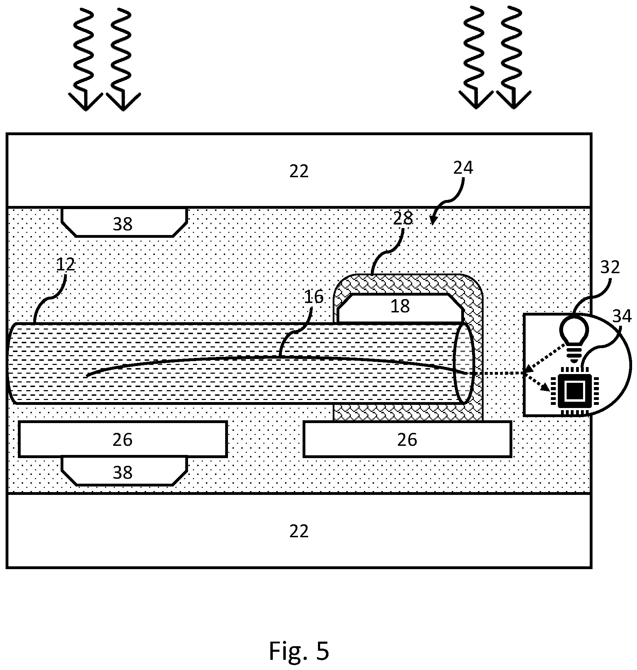

As may be appreciated, the purpose of the laminate structure 20 may influence the importance and effect of the transparency of the capillary 12 and/or medium 14. For example, if the laminate structure 20 is a photovoltaic, PV, laminate structure comprising a PV cell, high transparency of light in a wavelength range where the PV cell is efficient may be important in case of a front-side arrangement of the sensor device 10. The PV laminate structure will be further explained with regards to Fig. 5.

The optical fiber 16 may be any fiber suitable for transmitting optical signals. The optical fiber 16 may be attached by both or preferably one of its ends to a wall or seal of the capillary 12. The optical fiber 16 may alternatively float unattached in the medium 14 in the capillary 12.

The optical fiber 16 is shown as curved, however, it may also be substantially straight, i.e. parallel to the walls of the capillary 12.

Referring now to Fig. 1b, the laminate structure 20 comprising the sensor device 10 will be described in further detail. As illustrated in Fig. 1b, the capillary 12 of the sensor device 10 is embedded in the laminate structure 20 between two layers 22 thereof. The layers 22 of the laminate structure 20 may be glass such as low iron glass or float glass, quartz or polymer films such as polyvinyl fluoride, polyvinylidene fluoride or polyethylene terephthalate. The outer layers 22 of the laminate structure 20 may be hard polymers to protect the rest of the laminate structure 20, such as the fluoropolymers mentioned above. The laminate structure 20 may be a photovoltaic laminate structure (e.g. a "layup") comprising at least one PV cell.

In the embodiment shown in Fig. 1b, the capillary 12 is embedded in an encapsulant layer 24 of the laminate structure 20. The encapsulant layer 24 is a layer of the laminate structure 20 between two other layers 22 of the laminate structure 20. The encapsulant layer 24 may be a copolymer film such as ethylene vinyl acetate and used to provide adhesion between the two other layers 22 of the laminate structure 20. The laminate structure 20 may comprise several encapsulant layers 24, each between two other layers 22, and two encapsulant layers 24 may be adjacent to the same other layer 22.

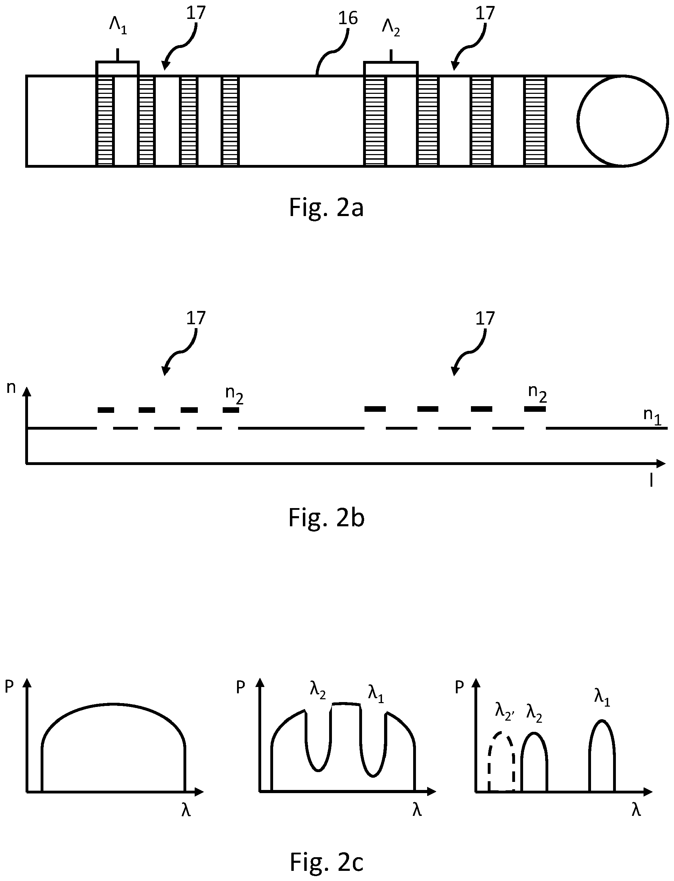

Referring now to Fig. 2a, an illustrative example of an optical fiber 16 comprising portions 17 with temperature-dependent transmission characteristics will be described in further detail. The temperature-dependent transmission characteristics are temperature-dependent transmission coefficients and temperature-dependent reflection coefficients in this case.

In the embodiment of Fig. 2a, the portions 17 are fiber Bragg gratings. Fiber Bragg gratings are beneficial in that they allow for a precise control of the transmission characteristics. The fiber Bragg gratings may be configured to reflect a specific range of wavelengths, which range changes depending on the temperature, as will be described below.

The illustrative example of fiber Bragg gratings 17 comprise two different materials with different refractive indices, $n_1$ and $n_2$, in a grating with repeating units of length $\Lambda$. The change in refractive index will cause at least a portion of the incident light to be reflected. The difference in refractive index, $n_2-n_1$, and the length of the repeating units $\Lambda$ will affect which wavelengths are reflected (and which are transmitted).

However, fiber Bragg gratings 17 comprising three or more different materials and/or repeating units of varying length are also possible. The fiber Bragg gratings shown are uniform, however chirped, tilted or super-structured fiber Bragg gratings may also be used. The different materials that result in different refractive indices, $n_1$ and $n_2$, may be non-doped and doped versions of the same material.

Fig. 2b shows a plot of the refractive index, n, of the two different materials of the optical fiber 16 in Fig. 2a along the length, l, of the optical fiber.

Fig. 2c shows three schematic plots of the power of light, P, as a function wavelength, $\lambda$. The leftmost plot shows the input light being inputted into the optical fiber 16 of Fig. 2a. The middle plot shows the light being transmitted through both of the fiber Bragg gratings. The rightmost plot shows the two reflected wavelength peaks, $\lambda_1$ and $\lambda_2$. Each reflected peak $\lambda_1$, $\lambda_2$ of light corresponds to a respective fiber Bragg grating. By associating the reflected peaks (or the corresponding transmitted light) with each portion of the optical fiber comprising the fiber Bragg gratings, several temperature measurements may be made at once at different positions along the optical fiber.

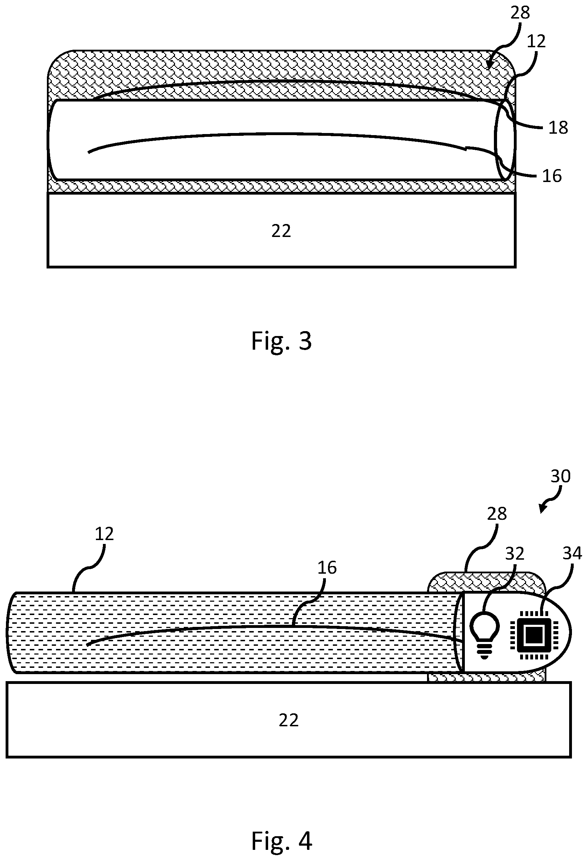

As the temperature of the optical fiber changes, the materials of the grating will expand and contract in a material-specific manner, in accordance with the respective coefficients of thermal expansion, CTEs. This will cause the length of the repeating units $\Lambda$ to change, thereby changing which wavelengths are reflected. A measurement circuit may measure this change and interpret it as a temperature measurement, which will be explained in more detail with regards to Fig. 4.

The dashed peak $\lambda_{2'}$ of the rightmost plot shows a change compared to $\lambda_2$ in the reflected light being reflected by the corresponding fiber Bragg grating. The amount of displacement of the peak is affected by the amount of change in temperature and is thereby measurable. This is merely a simplified example; the change may be much smaller and affect both the peaks and both the transmission and reflection in a more realistic scenario.

The temperature may further affect the refractive indices of the materials of the grating, which may also be considered, e.g. by the measurement circuit, when interpreting the change in which wavelengths are reflected as temperature measurements.

The optical fiber 16 may comprise at least two fiber Bragg gratings 17 having different temperature-dependent transmission characteristics, as shown in Fig. 2a. Each fiber Bragg grating 17 is configured to reflect a different range of wavelengths, wherein each range may change depending on the temperature such that each change is distinct to allow for several temperature measurement results (corresponding to the temperature at several locations in the laminate structure 20) to be analyzed at once. If these ranges are made distinct enough, each reflection (or corresponding transmission) may be associated with the correct portion 17 of the optical fiber 16, even if they have changed only slightly as a function of temperature. For example, each of the different fiber Bragg gratings 17 may be configured to have different ranges of possible reflection peaks (or the corresponding transmission) that do not overlap.

In order for each of the different fiber Bragg gratings 17 to have different ranges of possible reflection peaks, the length of the repeating units $\Lambda$ may be different in each of the different fiber Bragg gratings 17, such that they each reflect different ranges of wavelength of light, as shown in Fig. 2c.

Additionally or alternatively, the different fiber Bragg gratings may comprise different materials, such that the change in refractive index between $n_1$ and $n_2$ is different, thereby reflecting different ranges of wavelength of light. However, different materials may be affected differently by a change in temperature. Therefore, the ranges of possible reflection peaks may be different for each fiber Bragg grating in the entire expected temperature range.

A possible option to further differentiate the different fiber Bragg gratings 17 may be for each fiber Bragg grating to be of a different type, e.g. chirped or tilted. These different types may be affected differently by a change in temperature and have distinct reflection peaks (or corresponding transmission), therefore even overlapping reflection peaks may be correctly associated with the correct portion 17 of the optical fiber 16.

According to a further variation, temperature sensing based on time of flight of reflected light may be used instead of or in addition to wavelengths reflected or transmitted by fiber Bragg gratings. Temperature sensing based on time of flight function under the physical principle that the temperature of the optical fiber 16 slightly affects the propagation time of light in the optical fiber 16.

Time of flight measurements may use interferometry-based sensors, such as Fabry-Pérot, photonics crystal fiber, multicore-fiber, lossy mode resonance and Mach-Zehnder-based optical sensors. The optical fiber 16 may use and/or stimulate Rayleigh, Raman or Brillouin scattering.

In order to spatially resolve the temperature measurement, backscattering may be used. In order to stimulate backscattering, specific portions 17 of the optical fiber 16 comprise optical time-domain reflectors, OTDR, optical frequency-domain reflectors, OFDR, incoherent optical frequency domain reflectors, i-OFDR, or fiber Bragg reflectors to reflect the light at known positions.

If the time of flight changes for a given path of light compared to a reference, the average temperature of that path may be calculated. If the optical fiber 16 comprises several paths of light, due to portions 17 either reflecting the light or comprising sensors, the average temperature of the paths between each portion 17 may be calculated.

Referring now to Fig. 3, a strain sensor 18 comprised in the sensor device will be described in further detail. The sensor device may comprise a strain sensor 18 adapted to measure strain in proximity to the at least a portion 17 of the optical fiber 16 with temperature-dependent transmission characteristics.

Strain implies a deformation (e.g. elongation/shortening) of the optical fiber 16. Stress may be estimated from a strain measurement if the elasticity of the material of the optical fiber 16 is known, i.e. the stress-strain curve is known.

The strain sensor 18 may be rigidly attached to the capillary 12 via a bonding material 28. The rigidity of the attachment is beneficial in that it allows the strain sensor 18 to more accurately measure strain.

In Fig. 3, both the capillary 12 and the strain sensor 18 are further attached to a layer 22 of the laminate structure, e.g. using the same bonding material 28. This may allow the sensor device to be aligned more easily with the part of the laminate structure which temperature is to be measured.

The strain sensor 18 may be adapted to measure strain in proximity to the capillary 12. Proximity is beneficial in that it allows the thermal measurements to be decoupled from the mechanical measurements and vice versa. Proximity may for example be within a distance of half the diameter or the diameter of the capillary 12.

Decoupling the different measurements is accomplished e.g. by disregarding from the strain measurement the strain expected from thermal expansion corresponding to the temperature(s) measured by the sensor device. For example, a temperature measured using a portion 17 of the optical fiber 16 in proximity to the strain sensor 18 may be a parameter in a calculation of temperature-decoupled strain, e.g. performed by a measurement circuit using the strain measured by the strain sensor 18 of strain at the location of the strain sensor 18.

Stress affecting an optical fiber 16 may further affect the transmission characteristics of the fiber Bragg gratings of the optical fiber 16. For example, the optical fiber 16 may be bent, compressed or stretched due to strain caused by stress, which may bend or stretch the materials of the grating, thereby affecting the wavelengths that are reflected in an analogous manner as described above in relation to temperature.

Although the capillary 12 and medium of the sensor device may at least partially and preferably substantially shield the optical fiber 16 from such strain, as described above, it may still be beneficial for the sensor device to comprise a strain sensor 18 adapted to measure strain in proximity to the capillary 12, or more specifically in proximity to the portions of the optical fiber 16 within the capillary 12 with temperature-dependent transmission characteristics. This allows for strain that may affect the temperature measurement to be taken into consideration when calculating the temperature based on the transmission characteristics of fiber Bragg gratings. The thermal measurements may thereby be decoupled from the mechanical measurements. In an analogous manner, the mechanical measurements may be decoupled from the thermal measurements.

The strain sensor 18 may be an optical fiber with strain-dependent transmission characteristics. This allows for similar manufacturing processes of the different sensors of the sensor device, thereby increasing efficiency of bulk manufacturing and parallelization. The strain sensor 18 may comprise one or more fiber Bragg gratings to further adjust the strain-dependent transmission characteristics.

The strain-dependent transmission characteristics of the optical fiber of the strain sensor 18 may comprise one or more of a strain-dependent transmission coefficient, a strain-dependent reflection coefficient, a strain-dependent transmission wavelength or wavelength range, a strain-dependent reflection wavelength or wavelength range, or a strain-dependent time of flight of light propagating in the optical fiber, similar to what was described in relation to temperature measurements above.

Referring now to Fig. 4, the sensor device may as shown be incorporated in a sensor system 30 comprising the laminate structure to be measured; the sensor device as previously described, the capillary 12 thereof being embedded in the laminate structure between two layers 22 thereof; and a light source 32 configured to transmit light through the optical fiber 16 extending through the capillary 12. The sensor system 30 may further comprise a measurement circuit 34 as shown in Fig. 4.

The sensor device may be connected to a measurement circuit 34. The measurement circuit 34 is configured to measure a change in the temperature-dependent transmission characteristics of the optical fiber 16. The measurement circuit 34 is physically connected to an end of the optical fiber 16, where the optical fiber 16 may be fastened to the capillary 12.

A light source 32 is further connected to one end of the optical fiber 16, which may or may not be the same end as the measurement circuit 34. The light source 32 is configured to transmit light through the optical fiber 16 extending through the capillary 12. The light source 32 may be a laser or light emitting diode, LED. The light source 32 may have a broadband or multispectral wavelength spectrum such as a white light laser or white LED to allow for a larger variety in transmission characteristics.

A greater wavelength spectrum, i.e. bandwidth, of the light source 32 may allow a greater number of temperature measurements along the length of the optical fiber 16. This since a greater number of portions 17 with distinct reflection/transmission characteristics in the expected temperature range may be addressed.

The bandwidth of the light source 32 may e.g. be 120 nm, 100 nm or 80 nm with a peak wavelength in a range between 900-1600 nm. The wavength used in optical sensing may be chosen in accordance with the type and properties of the optical fiber, e.g. the core diameter or cladding material. As the refractive index is wavelength-dependent, not all wavelengths may be effectively transmitted through a specific optical fiber.

The measurement circuit 34 may be arranged to measure the light reflected or transmitted in the optical fiber 16 extending through the capillary 12 depending on which end of the fiber 16 the measurement circuit 34 is connected to. In either case, the reflected or transmitted light is indicative of the temperature of a layer 22 of the laminate structure, i.e. the layer 22 closest to the sensor device.

In embodiments with a strain sensor being an optical fiber, either a strain sensor comprised in the sensor device and/or embedded in the laminate structure, a measurement circuit 34 may be arranged to measure the light reflected or transmitted in the optical fiber of the strain sensor, the light being provided by the light source 32. The same measurement circuit 34 may be arranged to measure the light reflected or transmitted in both the optical fiber of the strain sensor and the optical fiber 16 extending through the capillary 12.

The measurement circuit 34 may be any circuit suitable for processing sensor data, such as a field-programmable gate array, FPGA, an application-specific integrated circuit, ASIC, a dedicated electronic circuit or any other processing circuit.

The measurement circuit 34 may comprise a photodetector configured to detect the wavelength of light being reflected or transmitted. The measurement circuit 34 may comprise a memory storing a predetermined reference for the transmission characteristics at a specific temperature or be calibrated to establish such a reference to be stored in said memory.

As the detected wavelength of light being reflected or transmitted changes, this change will be detected by the measurement circuit 34, which may calculate the temperature that would cause this change.

For example, a broadband light source 32 transmits light through the optical fiber 16 extending through the capillary 12. On the other side of the optical fiber 16, a measurement circuit 34 receives the transmitted light, however, two inverted peaks are missing in the expected spectrum, similar to the middle plot of Fig. 2c. The measurement circuit 34 detects the wavelengths of the inverted peaks, e.g. using a photodetector, and associates each peak with a portion of the optical fiber 16 with temperature-dependent transmission characteristics. The association occurs by finding the smallest distances from the peaks to a default wavelength associated with each portion, which may be stored in a memory. These distances are then used together with predetermined knowledge of at least the coefficients of thermal expansion of the portions to calculate what temperature change would cause the shift in reflected light compared to the default.

As an example, the wavelength spectrum of the light source 32 may be between 1520-1600 nm and the portions 17 of the optical fiber 16 with temperature-dependent transmission characteristics that reflect light around 1550 nm, 1570 nm and 1580 nm.

An example formula that may be used to calculate strain from a measurement by a strain sensor 18 comprising a fiber Bragg grating is:

$$\epsilon = \frac{1}{k} ln \frac{\lambda}{\lambda_0}$$

wherein $\epsilon$ is strain, $k$ is a predetermined gauge factor, $\lambda$ is the measured wavelength peak, $\lambda_0$ is a reference wavelength peak. The gauge factor may for example be $7.77 \cdot 10^{-7}$.

An example formula that may be used to calculate temperature from a measurement by a sensor device comprising a fiber Bragg grating portion 17 is:

$$T = T_{ref} - \frac{S_1}{2S_2} + \frac{S_2}{|S_2|} \cdot \sqrt{\left(\frac{S_1}{2S_2}\right)^2 + \frac{1}{S_2} ln \frac{\lambda}{\lambda_{ref}}}$$

wherein $T$ is temperature in Celsius or Kelvin, $T_{ref}$ is a reference temperature, $S_1$ is a linear temperature-sensitivity factor predetermined through calibration, $S_2$ is a quadratic temperature-sensitivity factor predetermined through calibration and $\lambda_{ref}$ is a reference wavelength peak at the reference temperature. The reference temperature $T_{ref}$ may for example be 22.5 °C.

An example formula that may be used to calculate temperature-compensated strain from a temperature measured e.g. by a sensor device according to the previous equation and a wavelength measurement from a strain sensor 18 comprising a fiber Bragg grating is:

$$\epsilon = \frac{1}{k}\left[ln \frac{\lambda}{\lambda_0} - S_1(\Delta T - \Delta T_0) - S_2(\Delta T^2 - \Delta T_0^2)\right] - \left(\alpha_s - \alpha_f\right)(\Delta T - \Delta T_0)$$

wherein $\Delta T = T - T_{ref}$, $\Delta T_0 = T_0 - T_{ref}$, $T_0$ is the temperature at the strain reference, $\alpha_s$ is the CTE of the material to which the strain sensor 18 is attached and $\alpha_f$ is the CTE of the fiber Bragg grating of the strain sensor 18. $\alpha_f$ may for example be 0.5 $\mu\epsilon$/K.

Note that the above formulas are mere examples of relationships between wavelength, temperature and strain. The skilled person will realise that there are other possible formulas.

The photodetector may comprise filters or a spectrometer in order to discern which wavelengths have been reflected or transmitted. In a simpler embodiment, the photodetector is only configured to detect whether the wavelength of the reflected or transmitted light has changed and possibly in what direction (i.e. shorter or longer wavelength) without measuring how much.

Referring now to Fig. 5, an embodiment of the sensor system 30 with the sensor device attached in front of a PV cell 26 of the laminate structure will be described in further detail. Although Fig. 5 shows a front-side arrangement of the sensor device, it is also possible to arrange the sensor device behind the PV cell 26.

The front or frontside of the PV cell 26 is to be understood as the side adapted to receive photons for the PV cell 26 to convert into electrical energy. This is shown in Fig. 5 by incoming photon arrows from the top of the figure, thereby signifying that the front of the PV cells 26 are upwards.

The sensor device is attached to a photovoltaic cell 26 using an optically transparent bonding material 28. By placing the sensor device in front of the PV cell 26, accurate measurements may be made regarding the temperature of the front of the PV cell 26, which may be crucial to determine damage and causes of disruptions for the PV cell 26.

The optically transparent bonding material 28 may e.g. be a cyanoacrylate-based adhesive or a UV-sensitized epoxy, i.e. UV-curable.

The relatively oblong and thin shape of the sensor device allows it to also be placed in front of the PV cell 26 without blocking an amount of light disrupting the efficiency of the PV cell 26 beyond an acceptable margin.

In order to further reduce the impact of placing the sensor device in front of the PV cell 26, the capillary 12 and medium of the sensor device may as discussed above be optically transparent. In this case, it is beneficial for the optical transparency of the capillary 12 and medium to be such that at least the wavelengths most important to the function of the PV cell 26 are reflected as little as possible. The wavelengths most important to the function of silicon PV cells 26 may, as a non-limiting example, range between 300 nm to more than 1 $\mu$m. Therefore, the optical transparency of the capillary 12 and medium may advantageously be such that visible light is scattered as little as possible. The sensor device may further be attached to the PV cell 26 using an optically transparent adhesive 28.

The optical fiber 16 of the sensor device is usually not transparent for light orthogonal to the optical fiber 16, however it is thin enough to not affect the function of the PV cell 26. In embodiments where the sensor device comprises a strain sensor 18, the strain sensor 18 may be an optical fiber as previously discussed in relation to Fig. 3. This has a further benefit in that the strain sensor 18 thereby also does not affect the function of the PV cell 26. This embodiment is not shown in Fig. 5.

Beyond the strain sensor(s) 18 of the sensor device, the sensor system 30 may further comprise one or more additional strain sensors 38 embedded in the laminate structure and optionally attached to any rigid or stiff layer 22 of the laminate structure, such as to an outside layer of the laminate structure facing away from the laminate structure, to an inside layer facing another layer of the laminate structure, or to another substrate within the laminate structure such as a PV cell 26.

In the embodiment of Fig. 5, the additional strain sensors 38 are attached to a layer 22 of the laminate structure and directly to the back of one PV cell 26 and the strain sensor 18 of the sensor device is attached to the capillary 12 of the sensor device.

The strain sensors 18, 38 of this embodiment may be any type of strain sensor, such as piezoresistive elements, ultrasonic sensors, wire lead strain gauges, the optical fiber as in Fig. 3 or any other suitable strain sensor. Each of the strain sensors 18, 38 are in relatively close proximity to the portion of the optical fiber 16 with temperature-dependent transmission characteristics and are adapted to measure strain in proximity to said at least a portion of the optical fiber 16. This allows for precise measurements of factors affecting the durability of the PV cell 26 without affecting its function. Of course, depending on the implementation and placement of the strain sensors 18, 38, their impact on the PV cell 26 will vary.

In embodiments where the laminate structure is architectural glass, optical transparency is beneficial in another manner. A main function of architectural glass is simply to be optically transparent for visible light. As such, there exists a need for a way to embed a sensor device into the architectural glass without disrupting its function, as there is nowhere to hide the sensor device corresponding to the back of the PV cell 26. The optional optical transparency of the sensor device thereby allows for accurate measurements within the architectural glass.

**Claims**

1. A sensor device (10) for measuring a temperature in a photovoltaic laminate structure (20), the sensor device (10) comprising:

    a capillary (12) for being embedded in the laminate structure (20) between two layers (22) thereof;
    a medium (14) arranged within the capillary (12); and
    an optical fiber (16) extending through the capillary (12) and surrounded by the medium (14), wherein at least a portion (17) of the optical fiber (16) has temperature-dependent transmission characteristics; and
    a strain sensor (18) configured to measure strain in proximity to the portion (17) of the optical fiber (16) with temperature-dependent transmission characteristics, wherein in proximity means within a distance of the diameter of the capillary (12), wherein the strain sensor (18) is another optical fiber with strain-dependent transmission characteristics arranged outside the capillary (12).

2. The sensor device according to claim 1, wherein the capillary (12) has a diameter equal to or smaller than 450 $\mu$m.

3. The sensor device according to claim 1 or 2, wherein said at least a portion (17) of the optical fiber (16) is a fiber Bragg grating.

4. The sensor device according to claim 3, wherein the optical fiber (16) comprises at least two fiber Bragg gratings (17) having different lattice constants.

5. The sensor device according to any one of the previous claims, wherein the medium (14) is a liquid medium.

6. The sensor device according to any one of the previous claims, wherein the medium (14) and the capillary (12) are optically transparent.

7. The sensor device according to any one of the previous claims, further configured to be connectable to a measurement circuit (34) configured to measure a change in the temperature-dependent transmission characteristics of the optical fiber (16).

8. A sensor system (30) for measuring a temperature in a laminate structure (20), the system (30) comprising:

the laminate structure (20) to be measured;
the sensor device (10) according to any one of the previous claims, the capillary (12) thereof being embedded in the laminate structure (20) between two layers (22) thereof; and
a light source (32) configured to transmit light through the optical fiber (16) extending through the capillary (12).

9. The sensor system according to claim 8, further comprising a measurement circuit (34) arranged to measure the light reflected or transmitted in the optical fiber (16) extending through the capillary (12), wherein the reflected or transmitted light is indicative of the temperature of a layer (22) of the laminate structure (20).

10. The sensor system according to claim 8 or 9, wherein the sensor device (10) is embedded in an encapsulant layer (24) of the laminate structure (20).

11. The sensor system according to any one of the claims 8-10, further comprising at least one strain sensor (38) embedded in the laminate structure (20).

12. The sensor system according to any one of the claims 8-11, wherein the laminate structure (20) further comprises at least one photovoltaic cell (26).

13. The sensor system according to claim 12, wherein the sensor device (10) is attached to the photovoltaic cell (26) using an optically transparent bonding material (28); and
the sensor system (30) further comprises a strain sensor (38) attached to the photovoltaic cell (26) using an optically transparent bonding material (28).

**Patentansprüche**

1. Sensorvorrichtung (10) zum Messen einer Temperatur in einer photovoltaischen Laminatstruktur (20), wobei die Sensorvorrichtung (10) umfasst:

eine Kapillare (12) zum Einbetten in die Laminatstruktur (20) zwischen zwei Schichten (22) derselben;
ein Medium (14), das innerhalb der Kapillare (12) angeordnet ist; und
eine Lichtleitfaser (16), die sich durch die Kapillare (12) hindurch erstreckt und von dem Medium (14) umgeben ist, wobei mindestens ein Abschnitt (17) der Lichtleitfaser (16) temperaturabhängige Übertragungskennzeichen aufweist; und
einen Dehnungssensor (18), der dazu konfiguriert ist, eine Dehnung in der Nähe des Abschnitts (17) der Lichtleitfaser (16) mit temperaturabhängigen Übertragungskennzeichen zu messen, wobei in der Nähe in einem Abstand von dem Durchmesser der Kapillare (12) bedeutet, wobei der Dehnungssensor (18) eine andere Lichtleitfaser mit dehnungsabhängigen Übertragungskennzeichen ist, die außerhalb der Kapillare (12) angeordnet ist.

2. Sensorvorrichtung nach Anspruch 1, wobei die Kapillare (12) einen Durchmesser aufweist, der gleich oder kleiner als 450 μm ist.

**3.** Sensorvorrichtung nach Anspruch 1 oder 2, wobei der mindestens eine Abschnitt (17) der Lichtleitfaser (16) ein Faser-Bragg-Gitter ist.

**4.** Sensorvorrichtung nach Anspruch 3, wobei die Lichtleitfaser (16) mindestens zwei Faser-Bragg-Gitter (17) umfasst, die unterschiedliche Gitterkonstanten aufweisen.

**5.** Sensorvorrichtung nach einem der vorhergehenden Ansprüche, wobei das Medium (14) ein flüssiges Medium ist.

**6.** Sensorvorrichtung nach einem der vorhergehenden Ansprüche, wobei das Medium (14) und die Kapillare (12) optisch transparent sind.

**7.** Sensorvorrichtung nach einem der vorhergehenden Ansprüche, die ferner dazu konfiguriert ist, an eine Messschaltung (34) anschließbar zu sein, die dazu konfiguriert ist, eine Änderung der temperaturabhängigen Übertragungskennzeichen der Lichtleitfaser (16) zu messen.

**8.** Sensorsystem (30) zum Messen einer Temperatur in einer Laminatstruktur (20), wobei das System (30) umfasst:

die zu messende Laminatstruktur (20);
die Sensorvorrichtung (10) nach einem der vorhergehenden Ansprüche, wobei die Kapillare (12) derselben in der Laminatstruktur (20) zwischen zwei Schichten (22) derselben eingebettet ist; und
eine Lichtquelle (32), die dazu konfiguriert ist, Licht über die Lichtleitfaser (16) zu übertragen, die sich durch die Kapillare (12) hindurch erstreckt.

**9.** Sensorsystem nach Anspruch 8, ferner umfassend eine Messschaltung (34), die dazu eingerichtet ist, das Licht zu messen, das in der Lichtleitfaser (16) reflektiert oder übertragen wird, die sich durch die Kapillare (12) hindurch erstreckt, wobei das reflektierte oder übertragene Licht die Temperatur einer Schicht (22) der Laminatstruktur (20) angibt.

**10.** Sensorsystem nach Anspruch 8 oder 9, wobei die Sensorvorrichtung (10) in einer Schicht (24) aus Einkapselungsstoff der Laminatstruktur (20) eingebettet ist.

**11.** Sensorsystem nach einem der Ansprüche 8 bis 10, ferner umfassend mindestens einen Dehnungssensor (38), der in der Laminatstruktur (20) eingebettet ist.

**12.** Sensorsystem nach einem der Ansprüche 8 bis 11, wobei die Laminatstruktur (20) ferner mindestens eine Photovoltaikzelle (26) umfasst.

**13.** Sensorsystem nach Anspruch 12, wobei die Sensorvorrichtung (10) an der Photovoltaikzelle (26) unter Verwendung eines optisch transparenten Bindematerials (28) angebracht ist; und
das Sensorsystem (30) ferner einen Dehnungssensor (38) umfasst, der an der Photovoltaikzelle (26) unter Verwendung eines optisch transparenten Bindematerials (28) angebracht ist.


**Revendications**

**1.** Dispositif de capteur (10) pour mesurer une température dans une structure stratifiée photovoltaïque (20), le dispositif de capteur (10) comprenant :

un capillaire (12) destiné à être incorporé dans la structure stratifiée (20) entre deux couches (22) de celle-ci ;
un milieu (14) disposé à l'intérieur du capillaire (12) ; et
une fibre optique (16) s'étendant à travers le capillaire (12) et entourée par le milieu (14), dans lequel au moins une partie (17) de la fibre optique (16) a des caractéristiques de transmission dépendantes de la température ; et
un capteur de contrainte (18) configuré pour mesurer la contrainte à proximité de la partie (17) de la fibre optique (16) avec des caractéristiques de transmission dépendantes de la température, dans lequel à proximité signifie à une distance du diamètre du capillaire (12), dans lequel le capteur de contrainte (18) est une autre fibre optique avec des caractéristiques de transmission dépendantes de la contrainte disposées à l'extérieur du capillaire (12).

**2.** Dispositif de capteur selon la revendication 1, dans lequel le capillaire (12) a un diamètre égal ou inférieur à 450 μm.

**3.** Dispositif de capteur selon la revendication 1 ou 2, dans lequel ladite au moins une partie (17) de la fibre optique (16) est un réseau de Bragg à fibre.

**4.** Dispositif de capteur selon la revendication 3, dans lequel la fibre optique (16) comprend au moins deux réseaux de Bragg à fibre (17) ayant des constantes de réseau différentes.

**5.** Dispositif de capteur selon une quelconque des revendications précédentes dans lequel le milieu (14) est un milieu liquide

**6.** Dispositif de capteur selon une quelconque des revendications précédentes, dans lequel le milieu (14) et le capillaire (12) sont optiquement transparents.

**7.** Dispositif de capteur selon une quelconque des revendications précédentes, configuré en outre pour pouvoir être connecté à un circuit de mesure (34) configuré pour mesurer une variation des caractéristiques de transmission dépendantes de la température de la fibre optique (16).

**8.** Système de capteur (30) pour mesurer une température dans une structure stratifiée (20), le système (30) comprenant :

la structure stratifiée (20) à mesurer ;
le dispositif de capteur (10) selon une quelconque des revendications précédentes, le capillaire (12) de celui-ci étant incorporé dans la structure stratifiée (20) entre deux couches (22) de celle-ci ; et
une source lumineuse (32) configurée pour transmettre la lumière à travers la fibre optique (16) s'étendant à travers le capillaire (12).

**9.** Système de capteur selon la revendication 8, comprenant en outre un circuit de mesure (34) agencé pour mesurer la lumière réfléchie ou transmise dans la fibre optique (16) s'étendant à travers le capillaire (12), dans lequel la lumière réfléchie ou transmise est indicative de la température d'une couche (22) de la structure stratifiée (20).

**10.** Système de capteur selon la revendication 8 ou 9, dans lequel le dispositif de capteur (10) est intégré dans une couche d'encapsulation (24) de la structure stratifiée (20).

**11.** Système de capteur selon une quelconque des revendications 8 à 10, comprenant en outre au moins un capteur de contrainte (38) intégré dans la structure stratifiée (20).

**12.** Système de capteur selon une quelconque des revendications 8 à 1 1, dans lequel la structure stratifiée (20) comprend en outre au moins une cellule photovoltaïque (26).

**13.** Système de capteur selon la revendication 12, dans lequel le dispositif de capteur (10) est fixé à la cellule photovoltaïque (26) à l'aide d'un matériau de liaison optiquement transparent (28) ; et
le système de capteur (30) comprend en outre un capteur de contrainte (38) fixé à la cellule photovoltaïque (26) à l'aide d'un matériau de liaison optiquement transparent (28).

Fig. 1a

Fig. 1b

Fig. 2a

Fig. 2b

Fig. 2c

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019016065 A1